# EUROPEAN PATENT APPLICATION

(11) **EP 0 708 292 A1**
(43) Date of publication of application: **24.04.1996**
(21) Application number: 95307438.2
(22) Date of filing: 18.10.1995
(51) Int. Cl.: F16N 7/04

(54) **Lubricators**

(30) Priority: 22.10.1994 GB 9421307
(71) Applicant: Cogger, Stephen Frank, Budleigh Salterton, Devon EX9 7DW (GB); Cogger, Clifford Frank, Garstang, Lancaster PR3 0DG (GB)
(72) Inventor: Cogger, Clifford Frank, Garstang, Lancaster PR3 0DG (GB)
(74) Representative: Brown, Michael Stanley

(57) **Abstract**

A lubricator includes a cylindrical chamber (10) within which lubricant can be contained, an outlet (14) for the discharge of lubricant from the chamber (10), a spring-loaded normally closed valve (5) for preventing the discharge of lubricant from the outlet (14) and an operating weight (2) which responds to acceleration and/or deceleration of the lubricator to open the valve (5) against the action of its spring (4).

## Description

### Field of the Invention

This invention relates to lubricators.

### Background to the Invention

There are many types of machines and apparatus which require lubrication and a variety of forms of lubricator are in use. Lubricators usually comprise a reservoir of lubricant that is gradually released, injected or forced onto the moving part or parts to be lubricated. Correct lubrication enables the smooth running of the machine or apparatus and prolongs its useful life.

It is desirable that, for reasons of economy and cleanliness, as well as for ecological reasons, the degree of lubrication should be adequate but not excessive and should occur while the machine or apparatus is in operation and should cease when the machine or apparatus is at rest.

The invention is more specifically concerned with that kind of lubricator which includes a chamber within which lubricant is contained, an outlet for the discharge of lubricant from the chamber and a valve which controls the discharge of lubricant through the outlet, said valve normally being closed.

One example of such a lubricator is shown in British Patent Specification No. 858733. In this instance, an internal gear is contained within the lubricant chamber of a sewing machine and one face of the internal gear is formed with a radial slot within which a spring-loaded valve gate member is slidable. The valve gate member is movable along the slot under centrifugal action such that, as the rate of rotation of the internal gear increases, the valve gate member moves radially outwardly and the degree of opening of the valve increases accordingly.

Such an arrangement provides for a high flow of lubricant when the sewing machine is operating at high speed and thus satisfies the lubrication requirements of a high-speed sewing machine. It does not, however, provide for discontinuous lubrication or lubrication only for relatively short periods such as is required for, for example, parts of motor cycles or gear mechanisms of mountain bikes.

It is accordingly an object of the present invention to provide an improved form of lubricator of the above kind which meets these criteria.

### Summary of the Invention

According to the present invention there is provided a lubricator of the kind which includes a chamber within which lubricant is contained, an outlet for the discharge of lubricant from the chamber, and a valve which controls the discharge of lubricant through the outlet, said valve normally being closed, characterised by the provision of means responsive to acceleration and/or deceleration of the chamber for effecting opening of the valve.

The lubricator may be used, for example, on a motor cycle for effecting lubrication of the cycle drive system with the axis of the cylindrical chamber substantially horizontal and the arrangement such that the valve is opened during acceleration of the lubricator chamber, i.e. while the motor cycle is accelerating, so that the lubricant will be delivered during the work period. In such instance, a separate lubricant reservoir may be provided and the reservoir may be arranged to maintain the level of lubricant in the chamber to a predetermined value.

The lubricator may alternatively be used on a mountain bike with the axis of the cylindrical chamber located substantially vertically so that upward and downward movement of the lubricator mounting, and hence acceleration and deceleration of the lubricator chamber, will result in periodic opening of the valve to effect a flow of lubricant to the required position. In such circumstances, the lubricator may incorporate an in-built reservoir.

Other preferred features of the invention are claimed in the subsidiary claims.

### Brief Description of the Drawings

Figure 1 is a longitudinal sectional view of one form of lubricator,
Figure 2 is a cross-sectional view of the lubricator along the line A-A of Figure 1, and
Figure 3 is a cross-sectional view of the lubricator along the line B-B of Figure 1.

### Description of the Preferred Embodiment

The lubricator shown in the drawings comprises a main body 1 which includes a central cylindrical portion 10 and a pair of end caps 11 and 12 attached to the two ends of the cylindrical portion 10. End cap 11 includes an inlet 13 to which a supply line (not shown) leading from a reservoir is connected so that the interior of the main body 1 can be maintained full of lubricant. End cap 12 is at the adjustment end 6 of the lubricator and includes an outlet 14 to which a supply line (not shown) is connected so that a supply of lubricant can be fed to the part, mechanism or the like which is to be lubricated.

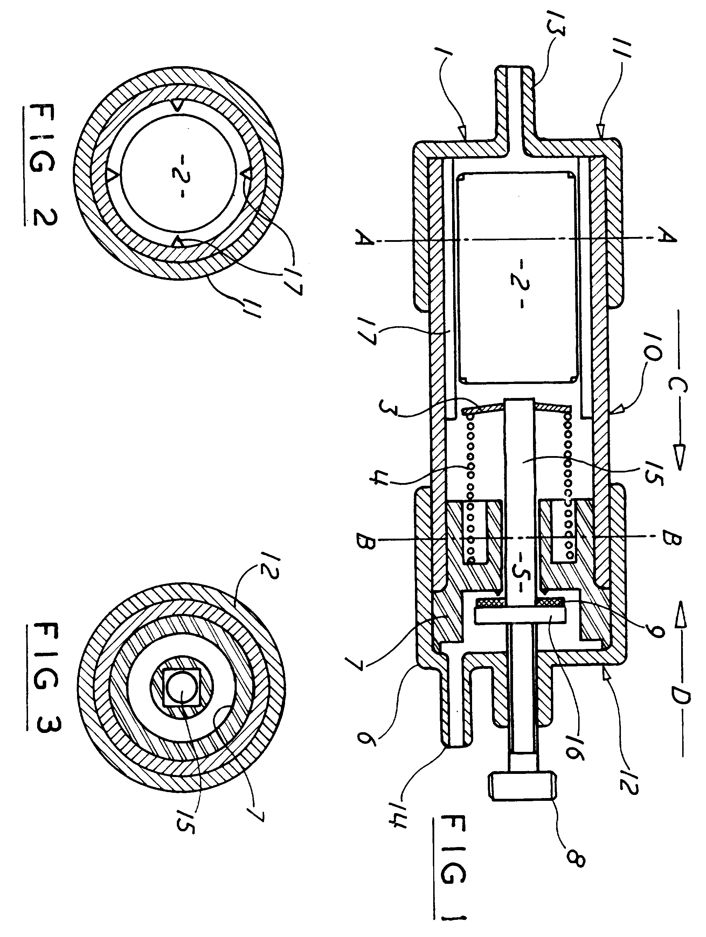

A valve block 7 is a close push fit in the outlet end of the cylindrical portion 10 and is formed with an axial bore in which the stem 15 of a control valve 5 is received. The bore is of square cross-section, as shown in Figure 3, and the valve stem 15 is of circular cross-section so as to permit the flow of lubricant along the bore around the valve stem 15. It is to be appreciated that the bore and stem 15 can be of other configurations to provide for the flow of lubricant.

At one end of the valve stem 15 there is a disc 16 which carries a sealing washer 9 positioned so that, when the control valve 5 is in its closed position, the sealing washer 9 engages the wall of the valve block 7 around the end of the axial bore to prevent the flow of lubricant towards the outlet 14.

At the other end of the valve stem 15 there is a retaining washer 3 which is acted upon by a helical spring 4 positioned within a well in the valve block 7 and arranged so that it acts to urge the valve stem 15 to the left as viewed in Figure 1. The spring 4 will thus act to urge the sealing washer 9 into engagement with the wall of the valve block 7 to prevent the flow of lubricant through the axial bore in the valve block 7. It is to be appreciated that, although the sealing washer 9 is shown in Figure 1 spaced from the wall of the valve block 7, this is purely for ease of illustration. If the lubricant is of a relatively thick consistency, sealing may be achieved by direct face-to-face engagement of the disc 16 with the adjacent wall of the valve block, i.e. the sealing washer 9 will not be required.

The main body 1 defines a chamber within which lubricant is contained. The major part of the volume of this chamber is taken up by a generally cylindrical operating mass or weight 2 which is arranged for guided sliding movement axially of, and within, the cylindrical portion 10. As can be seen from Figures 1 and 2, spaced longitudinal ribs 17 are provided within the cylindrical portion to guide the weight 2 and to allow for the flow of lubricant from the inlet 13 towards the valve block 7.

If, for example, the lubricator is to be mounted on a motor cycle, it will be provided with mounting clips (not shown) and will be mounted on the motor cycle with the axis of the main body 1 substantially horizontal and with the direction of forward travel of the motor cycle as indicated by the arrow D in Figure 1. While the motor cycle is at rest or travelling with a substantially constant velocity, the weight 2 will remain in the position shown and the valve 5 will remain closed. There will thus be no flow of lubricant to the outlet 14.

When, however, the motor cycle accelerates, the inertia of the weight 2 will cause it to move to the right as viewed in Figure 1 relative to the main body 1; it will come into contact with the end of the valve stem 15 and will displace the valve stem 15 to the right as viewed in Figure 1, thus opening the valve 5. For as long as the valve 5 is open, the lubricant will flow through the bore in the valve block 7 towards the outlet 14. However, as soon as the inertia of the weight has been expended, the spring 4 will act to move the valve stem 15 back to the left as viewed in Figure 1 and the valve 5 will be closed. The flow of lubricant towards the outlet 14 will thus take place only for a limited period and a limited quantity of lubricant will be dispensed.

The distance of travel of the valve stem 15 can be limited by means of an adjusting screw 8 which is mounted on the axis of the main body 1 and has threaded, lubricant-tight engagement in a threaded bore in the outlet end cap 12. If the screw 8 is rotated so as to project further into the interior of the main body 1, the permitted distance of travel of the valve stem 15 is reduced and, if the adjusting screw 8 is withdrawn, the permitted travel of the valve stem 15 is increased. The quantity of lubricant dispensed in response to a given acceleration of the motor cycle can thus be adjusted.

If the lubricator were so mounted on the motor cycle that the direction of travel is as indicated by the arrow C in Figure 1, lubricant would be dispensed in response to deceleration as opposed to acceleration of the motor cycle.

For use on a mountain bike, the lubricator would be mounted on a part of the bike which is subject to vertical movement when riding over rough terrain and the axis of the main body 1 would be positioned substantially vertically so that lubricant is dispensed in response to vertical acceleration or deceleration.

Although the use of the lubricator on a motor cycle or on a mountain bike has been mentioned by way of example, the lubricator of the present invention can be used for many other purposes, wherever controlled lubrication of a moving part or mechanism is to be effected when that part or mechanism is in operation.

In a modification to the arrangement described above, the normally closed valve is in the form of a disc spring-loaded into engagement with a wall of the valve block and arranged for displacement away from the wall of the valve block by means of a push rod engaged by the operating mass or weight, which push rod passes through a bore in the valve block in such way as to permit the flow of lubricant when the disc moves against the action of its spring-loading away from the wall of the valve block.

## Claims

1. A lubricator of the kind which includes a chamber (10) within which lubricant is contained, an outlet (14) for the discharge of lubricant from the chamber (10), and a valve (5) for controlling the discharge of lubricant through the outlet (14), said valve (5) normally being closed, characterised by the provision of means (2) responsive to acceleration and/or deceleration of the chamber (10) for effecting opening of the valve (5).

2. A lubricator as claimed in Claim 1, characterised in that the means responsive to acceleration and/or deceleration of the chamber (10) is an operating mass (2) arranged for sliding movement within the chamber (10) with the arrangement such that, when the mass (2) slides within the chamber (10) as a result of acceleration and/or deceleration of the chamber (10), the valve (5) is opened for a limited period of time, i.e. for as long as the force applied by the operating mass (2) is sufficient to overcome the action of a spring (4) which urges the valve (5) into its closed position.

3. A lubricator as claimed in Claim 2, characterised in that the lubricator is of generally cylindrical form with the chamber (10) for the lubricant at one end of the cylinder and a valve block (7) containing the valve (5) at the other end of the cylinder.

4. A lubricator as claimed in Claim 3, characterised in that the valve (5) comprises a stem (15) which passes through a wall of the valve block (7) and carries a sealing washer (9) for sealing engagement with said wall of the valve block (7), the valve stem (15) also carrying a retaining washer (3) against which one end of the spring (4) is arranged to act.

5. A lubricator as claimed in Claim 4, characterised in that the other end of the spring (4) is contained within a well in the valve block (7).

6. A lubricator as claimed in Claim 4, characterised in that adjustment means (8) is provided for adjusting the distance of travel of the valve stem (15) and thus the extent of opening of the valve (5).

7. A lubricator as claimed in Claim 6, characterised in that the adjustment means is in the form of an adjusting screw (8) arranged with its shank extending along the axis of the cylinder and located at the outlet end of the chamber (10).

8. A lubricator as claimed in any one of Claims 1 to 7, when mounted on a motor cycle for effecting lubrication of the cycle drive system, characterised in that the axis of the chamber (10) is substantially horizontal and the arrangement is such that the valve (5) is opened during acceleration of the motor cycle and thus of the chamber (10).

9. A lubricator as claimed in Claim 8 in combination with a separate lubricant reservoir, the reservoir being mounted on the motor cycle and so arranged as to maintain the level of lubricant in the chamber (10) to a predetermined value.

10. A lubricator as claimed in any one of Claims 1 to 7, when mounted on a mountain bike, characterised in that the axis of the chamber (10) is substantially vertical so that upward and downward movement of the lubricator mounting will result in periodic opening of the valve (5) to effect a flow of lubricant to the required position.
